# EUROPÄISCHE PATENTANMELDUNG

(11) **EP 2 384 977 A1**
(43) Veröffentlichungstag der Anmeldung: **09.11.2011**
(21) Anmeldenummer: 11003616.7
(22) Anmeldetag: 03.05.2011
(51) Int. Cl.: B65B 3/32, B65B 37/20, A22C 11/04

(54) **Vorrichtung und Verfahren zum Abfüllen von pastösem Füllgut**

(30) Priorität: 05.05.2010 DE 102010019426
(71) Anmelder: Heinrich Frey Maschinenbau GmbH, 89542 Herbrechtingen-Bolheim (DE)
(72) Erfinder: Frey, Heinrich, 89542 Herbrechtingen (DE); Frey, Martin, 89542 Herbrechtingen (DE)
(74) Vertreter: Manitz, Finsterwald & Partner GbR

(57) **Zusammenfassung**

Die vorliegende Erfindung betrifft eine Vorrichtung zum, insbesondere kontinuierlichen, Abfüllen von pastösem Füllgut, insbesondere Wurstmasse, mit einer Mehrzahl von auf einer geschlossenen Bahn, insbesondere auf einer Kreisbahn, umlaufenden und dabei wenigstens einen Füllbereich sowie zumindest einen Abgabebereich passierenden Kolben-/Zylinder-Anordnungen, die jeweils einen Zylinder und einen im Zylinder unter Veränderung eines für das Füllgut zur Verfügung stehenden Füllvolumens hin-und herbewegbaren Kolben umfassen, wobei die Stellungen der Kolben in den Zylindern von der Lage der Kolben-/Zylinder-Anordnungen relativ zu einer Steuerkurve (25,27) abhängig sind, mit der die Kolben-/Zylinder-Anordnungen bei ihrem Umlauf zusammenwirken, und wobei die Steuerkurve (25,27) veränderbar ist.

## Beschreibung

Die Erfindung betrifft eine Vorrichtung zum, insbesondere kontinuierlichen, Abfüllen von pastösem Füllgut, insbesondere Wurstmasse, mit einer Mehrzahl von auf einer geschlossenen Bahn, insbesondere auf einer Kreisbahn, umlaufenden und dabei wenigstens einen Füllbereich sowie zumindest einen Abgabebereich passierenden Kolben-/Zylinder-Anordnungen, die jeweils einen Zylinder und einen im Zylinder unter Veränderung eines für das Füllgut zur Verfügung stehenden Füllvolumens hin- und herbewegbaren Kolben umfassen, wobei die Stellungen der Kolben in den Zylindern von der Lage der Kolben-/Zylinder-Anordnungen relativ zu einer Steuerkurve abhängig sind, mit der die Kolben-/Zylinder-Anordnungen bei ihrem Umlauf zusammenwirken.

Die Erfindung betrifft außerdem ein entsprechendes Verfahren.

Derartige Vorrichtungen und Verfahren sind grundsätzlich bekannt und dienen insbesondere dazu, in Verbindung mit der Herstellung von Würsten eine beispielsweise über einen Fülltrichter zugeführte Wurstmasse kontinuierlich über ein so genanntes Füllrohr in einen Natur- oder Kunstdarm zu drücken.

Ein potentielles Problem bei derartigen bekannten Füllvorrichtungen ist, dass der so genannte Schmiereffekt auftreten kann, der darin besteht, dass während des Transportes des Füllgutes die Mageranteile mit dem Fett verschmiert werden. Das abgefüllte Produkt kann hierdurch ein unerwünschtes, insbesondere einen unerwünscht hohen Fettgehalt vorspiegelndes Aussehen erhalten. Des Weiteren muss auf eine möglichst luftblasenfreie Befüllung der Zylinder geachtet werden, da Lufteinschlüsse zu einer Qualitätsverschlechterung des abzufüllenden Gutes führen können und deshalb unerwünscht sind.

Aufgabe der Erfindung ist es, eine Abfüllvorrichtung beziehungsweise ein Abfüllverfahren der eingangs genannten Art zu schaffen, mit der beziehungsweise mit dem sich insbesondere vor dem Hintergrund der vorstehend erläuterten nachteiligen Effekte eine Verbesserung der Qualität des abgefüllten Füllgutes erreichen lässt.

Die Lösung dieser Aufgabe erfolgt durch die Merkmale des Anspruchs 1 sowie durch die Merkmale des unabhängigen Verfahrensanspruchs.

Erfindungsgemäß ist demnach bei der Abfüllvorrichtung vorgesehen, dass die Steuerkurve veränderbar ist. Bei dem erfindungsgemäßen Abfüllverfahren ist vorgesehen, dass zum Einstellen eines jeweiligen maximalen Füllvolumens der Kolben-/Zylinder-Anordnungen und/oder eines unteren Totpunktes der Kolben die Steuerkurve verändert wird.

Es ist unerwarteter Weise festgestellt worden, dass das jeweilige maximale Füllvolumen der Zylinder einen relevanten Einfluss auf die Qualität des abgefüllten Produktes hat und insbesondere das Auftreten der oben genannten nachteiligen Effekte beeinflusst. Auch in Abhängigkeit von dem jeweiligen Füllgut selbst, insbesondere dessen Zusammensetzung und Konsistenz, kann demnach durch Bereitstellen eines jeweils gezielt abgestimmten maximalen Füllvolumens das Auftreten der nachteiligen Effekte minimiert werden. Die erfindungsgemäß vorgesehene Möglichkeit, den Verlauf der Steuerkurve für die Kolben-/Zylinder-Anordnungen zu verändern, ermöglicht somit eine vorteilhafte Verbesserung der Qualität des abgefüllten Produktes insbesondere vor dem Hintergrund der vorstehend erläuterten Problematik.

Bevorzugte Ausführungsformen der Erfindung sind auch in den abhängigen Ansprüchen, der nachstehenden Beschreibung sowie der Zeichnung angegeben.

Die Vorrichtung kann derart ausgebildet sein, dass durch Verändern der Steuerkurve ein jeweiliges maximales Füllvolumen der Kolben-/Zylinder-Anordnungen und/oder ein unterer Totpunkt der Kolben in den Zylindern einstellbar ist. Grundsätzlich kann das Verändern der Steuerkurve auch anderen Zwecken dienen.

Des Weiteren ist bevorzugt vorgesehen, dass das Verändern der Steuerkurve die Kolbenstellungen am Abgabebereich der Vorrichtung unverändert lässt.

In einem weiteren Ausführungsbeispiel der Erfindung ist vorgesehen, dass die Steuerkurve von wenigstens zwei relativ zueinander verstellbaren Einzel-Kurven gebildet ist. Dies stellt eine konstruktiv besonders einfache und gleichzeitig äußerst zuverlässige und wirkungsvolle Ausgestaltung dar, mit welcher der Bewegungsablauf der Kolben während des Umlaufs der Kolben-/Zylinder-Anordnungen gezielt beeinflusst und insbesondere das maximale Füllvolumen eingestellt werden kann. Um die erfindungsgemäße Abfüllvorrichtung für die jeweilige Anwendung optimal einzustellen, brauchen lediglich die beiden Einzel-Kurven relativ zueinander verstellt zu werden.

Hierbei kann insbesondere vorgesehen sein, dass für jede Stellung eines Kolbens auf der Umlaufbahn die dort jeweils höher liegende Einzel-Kurve die Höhenposition des Kolbens bestimmt.

Ferner kann vorgesehen sein, dass in zumindest einer Relativstellung die eine Einzel-Kurve von der anderen Einzel-Kurve wenigstens einen Abschnitt abschneidet und den abgeschnittenen Abschnitt ersetzt.

Vorzugsweise ist wenigstens eine Einzel-Kurve geschlossen.

Des Weiteren ist bevorzugt vorgesehen, dass wenigstens eine Einzel-Kurve relativ zu den Kolben-/Zylinder-Anordnungen feststehend ist.

Ferner sind gemäß einem weiteren Ausführungsbeispiel zwei geschlossene Einzel-Kurven vorgesehen.

Ein weiteres Ausführungsbeispiel zeichnet sich dadurch aus, dass wenigstens eine geschlossene Einzel-Kurve in einer Ebene liegt, die parallel zu einer Ebene verläuft, in der die Bahn der Kolben-/Zylinder-Anordnungen liegt.

Des Weiteren ist in einem Ausführungsbeispiel der Erfindung vorgesehen, dass die eine Einzel-Kurve in eine Neutralstellung überführbar ist, in der ausschließlich die andere Einzel-Kurve wirksam ist.

Ferner wird erfindungsgemäß vorgeschlagen, dass die Einzel-Kurven - in einer Projektion auf eine die Bahn der Kolben-/Zylinder-Anordnungen enthaltende Ebene gesehen - nebeneinander verlaufen und insbesondere auf konzentrischen Kreisen liegen. Hierdurch können z.B. als Rollen oder Gleiter ausgebildete Folgeglieder der Kolben-/Zylinder-Anordnungen einfach ausreichend breit ausgebildet werden und so einen Bereich für die eine Einzel-Kurve sowie einen weiteren Bereich für die andere Einzel-Kurve aufweisen, wobei für jede Drehstellung die dort jeweils höher liegende Einzel-Kurve die Höhenposition des betreffenden Kolbens bestimmt.

Des Weiteren kann erfindungsgemäß vorgesehen sein, dass die Einzel-Kurven, insbesondere stirnseitig und/oder umfangsseitig, an gegeneinander längs einer gemeinsamen Achse verschiebbaren Elementen ausgebildet sind, wobei bevorzugt wenigstens ein Element ring- oder hülsenförmig ausgebildet ist.

Ferner kann erfindungsgemäß zumindest eine Einzel-Kurve mit einem manuell oder motorisch drehbaren Stellring verbunden sein, wobei eine Drehbewegung des Stellrings in eine lineare Verstellbewegung der Einzel-Kurve umsetzbar ist, wobei hierzu insbesondere eine Gewindeanordnung vorgesehen ist.

In einem weiteren Ausführungsbeispiel der Erfindung ist den Kolben jeweils ein mit der Steuerkurve zusammenwirkendes Folgeglied zugeordnet, bei dem es sich insbesondere um eine Rolle handelt.

Die Erfindung wird im Folgenden beispielhaft unter Bezugnahme auf die Zeichnung beschrieben. Es zeigen:
- Fig. 1: schematisch eine Ausführungsform einer erfindungsgemäßen Abfüllvorrichtung,
- Fig. 2: einen Teil einer Ausführungsform einer erfindungsgemäßen Abfüllvorrichtung,
- Fig. 3: eine andere Ansicht der Abfüllvorrichtung von Fig. 2,
- Fig. 4: eine Ansicht entsprechend Fig. 3, bei der jedoch ein Bauteil (Stellring) weggelassen ist, und
- Fig. 5: eine schematische Darstellung zur Erläuterung eines möglichen Funktionsprinzip der Erfindung.

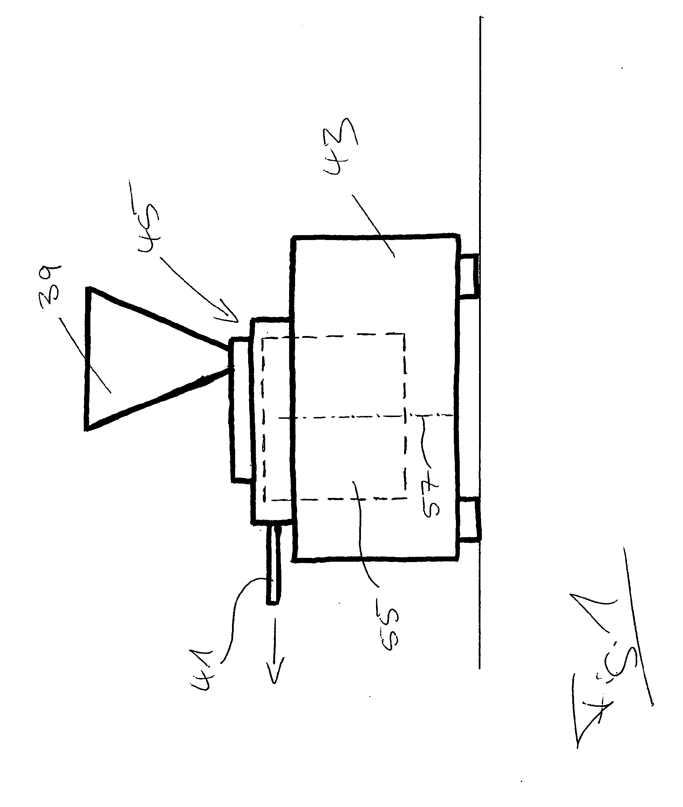

Einen möglichen grundsätzlichen Aufbau einer erfindungsgemäßen Abfüllvorrichtung zeigt Fig. 1. Eine abzufüllenden Wurstmasse wird in einen Fülltrichter 39 eingebracht, der auf einem Aufsatz 45 sitzt, welcher wiederum von einem Gestell 43 getragen ist.

Innerhalb des Aufsatzes 45 gelangt die Wurstmasse in auf einer Kreisbahn umlaufende Zylinder, über welche die Wurstmasse kontinuierlich einem Füllrohr 41 zugeführt wird. Hierauf wird nachstehend näher eingegangen. Das Befüllen der Zylinder mit der Wurstmasse erfolgt in einem auf der Kreisbahn liegenden Füllbereich, während in einem anderen Bereich der Kreisbahn die Abgabe der Wurstmasse an das Füllrohr 41 erfolgt. Sowohl der Füllbereich als auch der Abgabebereich erstrecken sich über einen bestimmten Winkelbereich der Kreisbahn.

Die Bewegung der Zylinder sowie von sich in den Zylindern auf- und abbewegenden Kolben erfolgt mittels einer in Fig. 1 lediglich gestrichelt angedeuteten Trageinheit 55, die eine den Mittelpunkt der kreisförmigen Umlaufbahn für die Kolben-/Zylinder-Anordnungen definierende vertikale Drehachse 57 aufweist. Die Zylinder sind in Form von Bohrungen in der Trageinheit 55 vorgesehen.

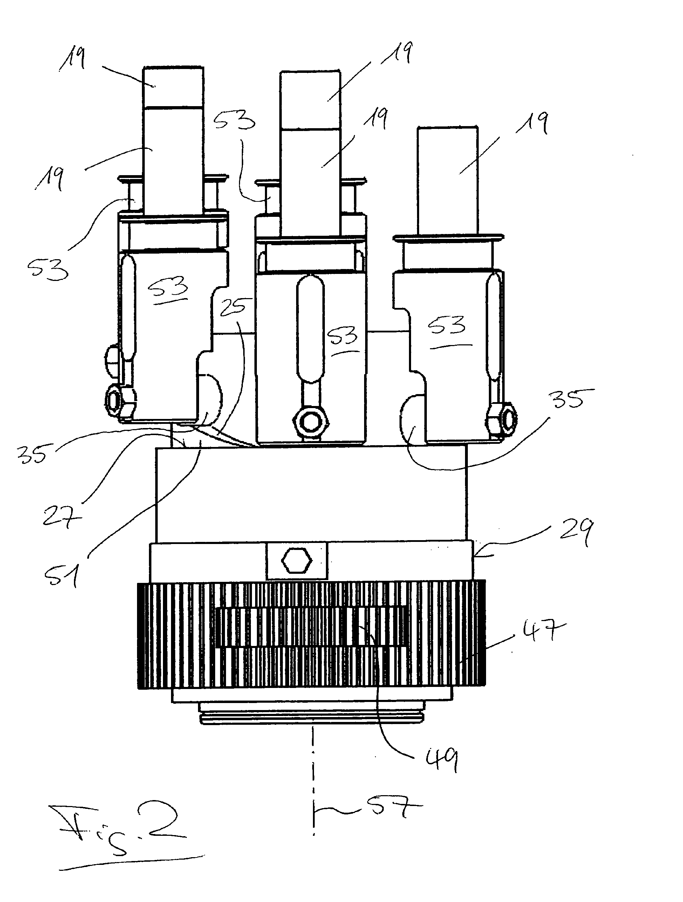

Weitere Einzelheiten der erfindungsgemäßen Abfüllvorrichtung von Fig. 1 sind in Fig. 2 dargestellt.

Die Abfüllvorrichtung umfasst eine Mehrzahl von Kolben-/Zylinder-Anordnungen, von denen in Fig. 2 jeweils ein Kolben 19 und ein Träger 53 für den Kolben 19 dargestellt sind. Jeder Träger 53 ist mit einem Folgelied in Form einer Rolle 35 versehen, mit welcher der Träger 53 und somit der Kolben 19 längs einer Führungsbahn oder Steuerkurve 25 geführt wird, wenn die Kolben-/Zylinder-Anordnungen gemeinsam mit der hier nicht näher dargestellten Trageinheit um die Drehachse 57 umlaufen, relativ zu welcher die Steuerkurve 25 feststehend angeordnet ist.

Da die Träger 53 mit den Kolben 19 unter dem Einfluss der Schwerkraft stehen, handelt es sich bei der Führung durch die Steuerkurve 25 um eine Zwangsführung insofern, als die Bahn der Kolben 19 im Raum, d.h. die vertikale Stellung der Kolben 19 in den Zylindern in Abhängigkeit von der Drehstellung, eindeutig vorgegeben ist.

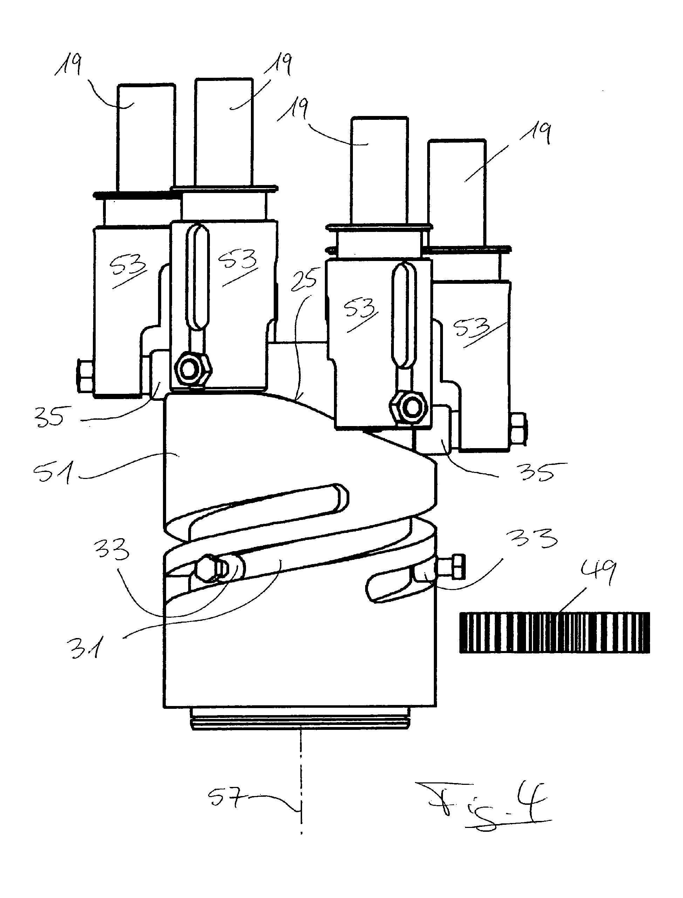

In diesem Ausführungsbeispiel ist die Steuerkurve 25 aus einem als Voll-oder Hohlzylinder ausgebildeten Element 51 (vgl. auch Fig. 4) umfangsseitig durch Fräsen herausgearbeitet worden, wobei das Element 51 bezüglich der Drehachse 57 nicht nur in Umfangsrichtung, sondern auch in axialer Richtung feststehend ist.

Während eines Abfüllvorgangs drehen sich die Kolben-/Zylinder-Anordnungen gewissermaßen wie bei einem Karussell um die Drehachse 57 und dabei sozusagen nach Art einer Berg- und Talbahn durch die Rollen 35 geführt auf der Steuerkurve 25. Der Verlauf der Steuerkurve 25 definiert dabei die Abhängigkeit der Höhenlagen der obern Stirnflächen der Kolben 19 von den jeweiligen Drehstellungen.

In Fig. 2 nicht dargestellt ist die bereits erwähnte Trageinheit, in der die die Zylinder bildenden Bohrungen für die Träger 53 beziehungsweise für die Kolben 19 ausgebildet sind und die zu einer Drehbewegung um die Drehachse 57 angetrieben wird, um auf diese Weise die Kolbenträger 53 umlaufen zu lassen, die dabei in einer durch den Verlauf der Steuerkurve 25 bestimmten Art und Weise angehoben und abgesenkt werden.

Zusätzlich zu der erwähnten Steuerkurve 25 ist eine weitere, eine Kreisbahn um die Drehachse 50 bildende Steuerkurve 27 vorgesehen, die stirnseitig an einem über das Element 51 geschobenen Stellring 29 ausgebildet ist. Der Stellring 29 ist umfangsseitig mit einer Außenverzahnung 47 versehen, über welche der Stellring 29 mittels eines manuellen oder motorischen Antriebs, von dem lediglich ein Zahnrad 49 dargestellt ist, zu einer Drehbewegung um die Drehachse 57 angetrieben werden kann.

Diese Drehbewegung des Stellrings 29 wird in eine axiale und damit lineare Verstellbewegung parallel zur Drehachse 57 umgesetzt, und zwar mittels innen am Stellring 29 vorgesehener Führungselemente 33, die in einem helix- oder wendelförmigen Führungsschlitz 31 laufen, der umfangsseitig an dem feststehenden Element 51 (vgl. Fig. 4) ausgebildet ist.

Grundsätzlich kann der Verstellmechanismus für die weitere Steuerkurve 27 auch auf andere Art und Weise ausgestaltet sein.

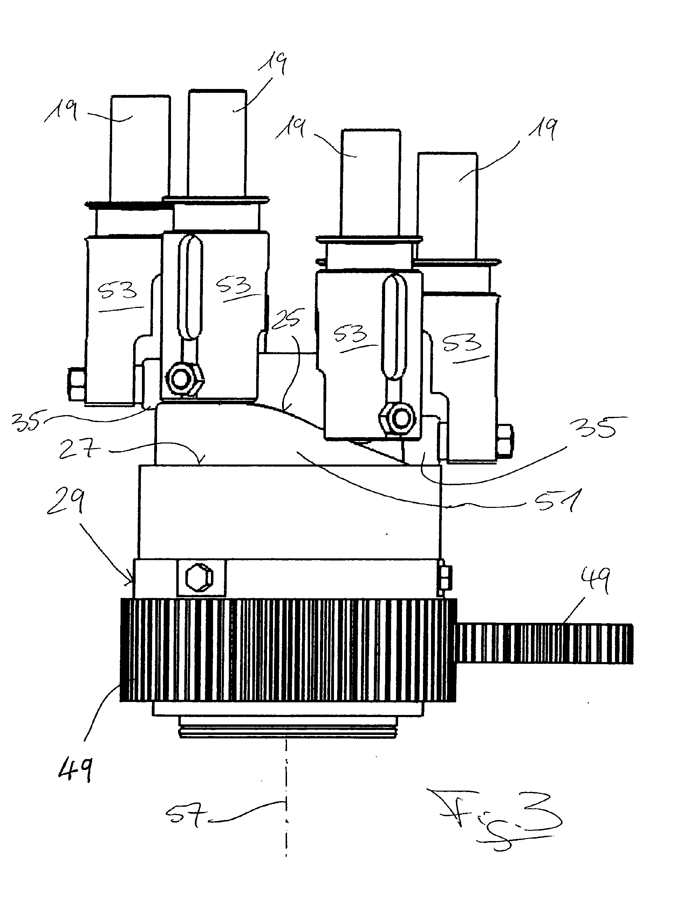

Fig. 3 zeigt die Anordnung von Fig. 2 in einer um 90 Grad gedrehten Ansicht, während Fig. 4 der Darstellung von Fig. 3 entspricht, wobei hier von dem Stellring lediglich die in dem Schlitz 31 laufenden Führungselemente 33 dargestellt sind.

Während die feste Steuerkurve 25 des Elementes 51 - bezogen auf eine senkrecht zur Drehachse 57 verlaufende Ebene - ein Höhenprofil ("Berg-und Talbahn") definiert, liegt die verstellbare Steuerkurve 27 vollständig in einer ebenfalls senkrecht zur Drehachse 57 verlaufende Ebene. In einer Projektion auf eine solche Ebene gesehen liegen die beiden geschlossenen Steuerkurven 25, 27 auf konzentrischen Kreisen, wobei die Steuerkurve 27 radial außerhalb der Steuerkurve 25 verläuft. Die Breite der an den Kolbenträgern 53 vorgesehenen Rollen 35 ist größer als die Breite der die feststehende Steuerkurve 25 bildenden Bahn, so dass die Rollen 35 radial nach außen überstehen und somit bei entsprechender Höhenposition des Stellrings 29 mit der am Stellring 29 ausgebildeten Steuerkurve 27 zusammenwirken können, worauf nachstehend näher eingegangen wird.

Fig. 2, 3 und 4 ist zu entnehmen, dass sich der Stellring 29 hier in einer Neutralstellung befindet, in welcher die Steuerkurve 27 derart tief gelegen ist, dass sie unterhalb des tiefsten Punktes der feststehenden Steuerkurve 25 liegt und somit die Kolben 19 ausschließlich mit dieser nicht verstellbaren Steuerkurve 25 zusammenwirken. Der Abfüllvorgang ist hinsichtlich der Auf- und Abbewegung der Kolben 19 während des Umlaufs um die Drehachse 57 folglich ausschließlich durch den Verlauf dieser Steuerkurve 25 bestimmt. Insbesondere ist jeweils die tiefste Stellung der Kolben 19 im Zylinder, d.h. der untere Totpunkt der Kolben 19, und damit jeweils das maximale Füllvolumen der Kolben-/Zylinder-Anordnungen durch den Verlauf der feststehenden Steuerkurve 25 vorgegeben.

Wird nun der Stellring 29 über den das Zahnrad 49 umfassenden Antrieb gedreht, wird die Steuerkurve 27 linear längs der Drehachse 57 nach oben bewegt, sodass die Steuerkurve 27 von der feststehenden Steuerkurve 25 einen Abschnitt abschneidet und den oder die abgeschnittenen Abschnitte ersetzt. Je nach Höhenstellung der am Stellring 29 ausgebildeten Steuerkurve 27 und des konkreten Verlaufs der feststehenden Steuerkurve 25 können von der feststehenden Steuerkurve 25 ein Abschnitt oder mehrere Abschnitte abgeschnitten werden. Während ihres Umlaufs um die Drehachse 57 laufen somit die Rollen 35 der Kolbenträger 53 abschnittsweise entweder auf der verstellbaren Steuerkurve 27, und zwar mit einem radial außen gelegenen Rollenbereich, oder auf der feststehenden Steuerkurve 25, und zwar mit einem radial innen liegenden Rollenbereich.

Generell ausgedrückt bilden die verstellbare Steuerkurve 27 und die feststehende Steuerkurve 25 somit relativ zueinander verstellbare Einzel-Kurven, die gemeinsam die resultierende Gesamt-Steuerkurve für die umlaufenden Kolben 19 bilden. In dem Sonderfall mit in der erwähnten Neutralstellung befindlicher verstellbarer Steuerkurve 27 ist ausschließlich die feststehende Steuerkurve 25 wirksam, die in dieser Einstellung somit die einzige und damit die resultierende Gesamt-Steuerkurve für die Kolben 19 bildet.

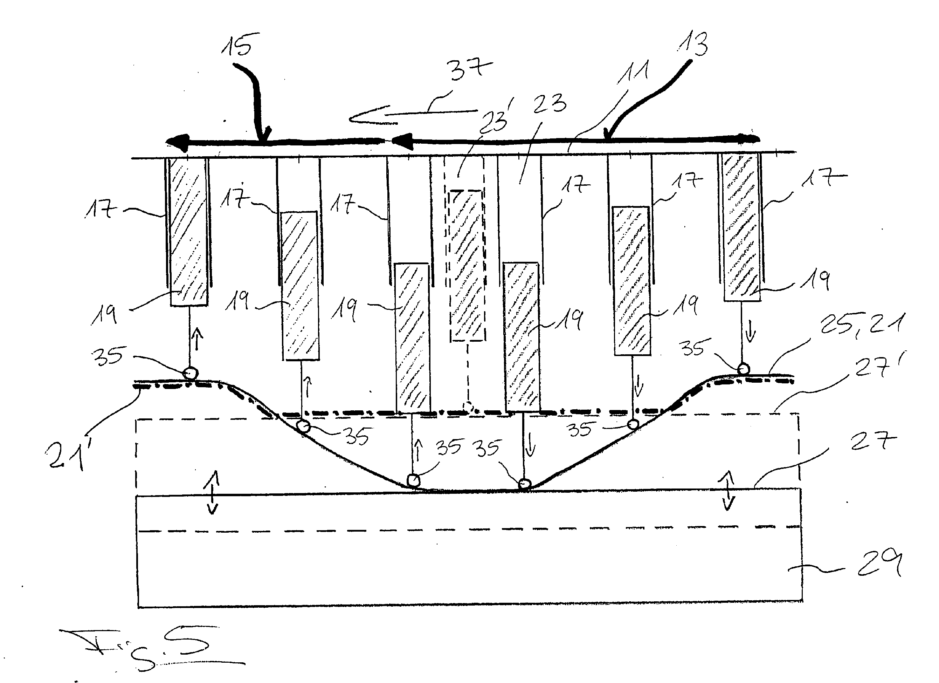

Allgemein ist ein mögliches, der Erfindung zu Grunde liegendes Funktionsprinzip in Fig. 5 dargestellt, in der die Umlaufbewegung der Kolben 19 und Zylinder 17 in einer ebenen abgewickelten Darstellung veranschaulicht ist.

Die Abfüllvorrichtung umfasst beispielsweise sechs Zylinder, die auf einem Kreis 11 um die Drehachse 57 gleichmäßig verteilt angeordnet sind und in denen jeweils ein Kolben 19 auf- und abbewegbar ist. Jeder Kolben 19 ist mit einem Folgeglied z. B. in Form einer Rolle 35 versehen.

Der Stellring 29 ist mit durchgezogenen Linien in einer Neutralstellung dargestellt, in welcher die Rollen 35 der Kolben 19 ausschließlich mit der feststehenden Steuerkurve 25 zusammenwirken, die in dieser Einstellung somit die resultierende Steuerkurve 21 für die Kolben 19 bildet.

Ein Füllbereich 13, in welchem den Zylindern 17 beispielsweise über einen Fülltrichter (vgl. Fig. 1) abzufüllende Wurstmasse zugeführt wird, erstreckt sich über einen bestimmten Winkelbereich, der in Fig. 5 durch einen Pfeil angedeutet ist. Die Umlaufrichtung 37 auf der Kreisbahn 11 ist in Fig. 5 ebenfalls durch einen Pfeil angedeutet, d.h. im weiteren Verlauf der Umlaufbewegung senkt sich der Kolben 19 ausgehend von seinem oberen Totpunkt (ganz rechts in Fig. 5) im Zylinder 17 ab. Hierbei gelangt nach und nach Wurstmasse in den Zylinder 17. Das jeweilige maximale Füllvolumen 23 ist erreicht, wenn die Rolle 35 des Kolbens 19 an der tiefsten Stelle der feststehenden Steuerkurve 25 angelangt ist, wobei zu diesem Zeitpunkt bereits der nachfolgende Kolben gefüllt wird.

Im weiteren Verlauf der Umlaufbewegung wird der Kolben 19 wieder angehoben und somit die Wurstmasse nach und nach aus dem Zylinder 17 herausgedrückt (der Abgabebereich 15, in welchem dies erfolgt, schließt an den Füllbereich 13 an, wie durch einen weiteren Pfeil in Fig. 5 angedeutet ist), bis der Kolben 19 wieder seinen oberen Totpunkt im Zylinder 17 erreicht hat, wobei die Wurstmassenabgabe zu diesem Zeitpunkt aufgrund des kontinuierlichen Prozesses bereits durch den nachfolgenden Kolben besorgt wird.

Wird der Stellring 29 aus seiner Neutralstellung nach oben verstellt, wie es in Fig. 5 durch die gestrichelte Linie angedeutet ist, schneidet die am Stellring 29 ausgebildete Steuerkurve 27' einen Teil der feststehenden Steuerkurve 25 ab und ersetzt diesen. Die resultierende Steuerkurve 21' für die Kolben 19 ist in Fig. 5 durch eine strichpunktierte Linie dargestellt. In diesem Ausführungsbeispiel ändert sich die Position des oberen Totpunktes der Kolben 19 in den Zylindern 17 nicht. Die Kolben 19 werden jedoch während ihres Umlaufs weniger weit abgesenkt als zuvor, d.h. das Verstellen des Stellrings 29 hat den unteren Totpunkt der Kolben 19 verändert und dabei das maximale Füllvolumen 23' der Zylinder 17 verringert.

Die Veränderbarkeit der für die Kolben 19 wirksamen Steuerkurve 21 ändert nichts daran, dass es sich bei dem Abfüllvorgang um einen kontinuierlichen Prozess handelt und die Kolben-/Zylinder-Anordnungen während des Abfüllens mit einer konstanten oder veränderlichen Geschwindigkeit längs ihrer Bahn 11 bewegt werden können.

### Bezugszeichenliste

- 11: Bahn
- 13: Füllbereich
- 15: Abgabebereich
- 17: Zylinder
- 19: Kolben
- 21, 21': Steuerkurve
- 23, 23': maximales Füllvolumen
- 25: Einzel-Kurve (feststehend)
- 27, 27': Einzel-Kurve (verstellbar)
- 29: Stellring
- 31: Schlitz
- 33: Führungselement
- 35: Folgeglied, Rolle
- 37: Umlaufrichtung
- 39: Fülltrichter
- 41: Füllrohr
- 43: Gestell
- 45: Aufsatz
- 47: Verzahnung
- 49: Zahnrad
- 51: Element
- 53: Träger
- 55: Trageinheit
- 57: Drehachse

## Patentansprüche

1. Vorrichtung zum, insbesondere kontinuierlichen, Abfüllen von pastösem Füllgut, insbesondere Wurstmasse, mit
einer Mehrzahl von auf einer geschlossenen Bahn (11), insbesondere auf einer Kreisbahn, umlaufenden und dabei wenigstens einen Füllbereich (13) sowie zumindest einen Abgabebereich (15) passierenden Kolben-/Zylinder-Anordnungen, die jeweils einen Zylinder (17) und einen im Zylinder (17) unter Veränderung eines für das Füllgut zur Verfügung stehenden Füllvolumens hin- und herbewegbaren Kolben (19) umfassen,
wobei die Stellungen der Kolben (19) in den Zylindern (17) von der Lage der Kolben-/Zylinder-Anordnungen relativ zu einer Steuerkurve (21) abhängig sind, mit der die Kolben-/Zylinder-Anordnungen bei ihrem Umlauf zusammenwirken, und
wobei die Steuerkurve (21) veränderbar ist.

2. Vorrichtung nach Anspruch 1,
**dadurch gekennzeichnet,**
**dass** durch Verändern der Steuerkurve (21) ein jeweiliges maximales Füllvolumen (23, 23') der Kolben-/Zylinder-Anordnungen einstellbar ist, und/oder dass durch Verändern der Steuerkurven (21) ein unterer Totpunkt der Kolben (19) einstellbar ist.

3. Vorrichtung nach einem der vorhergehenden Ansprüche,
**dadurch gekennzeichnet,**
**dass** das Verändern der Steuerkurve (21) die Kolbenstellungen am Abgabebereich (15) unverändert lässt.

4. Vorrichtung nach einem der vorhergehenden Ansprüche,
**dadurch gekennzeichnet,**
**dass** die Steuerkurve (21) von wenigstens zwei relativ zueinander verstellbaren Einzel-Kurven (25, 27) gebildet ist.

5. Vorrichtung nach Anspruch 4,
**dadurch gekennzeichnet,**
**dass** in zumindest einer Relativstellung die eine Einzel-Kurve (27) von der anderen Einzel-Kurve (25) wenigstens einen Abschnitt abschneidet und den abgeschnittenen Abschnitt ersetzt.

6. Vorrichtung nach Anspruch 4 oder 5,
**dadurch gekennzeichnet,**
**dass** wenigstens eine Einzel-Kurve (25, 27) geschlossen ist, und/oder dass wenigstens eine Einzel-Kurve (25) relativ zu den Kolben-/Zylinder-Anordnungen feststehend ist.

7. Vorrichtung nach einem der Ansprüche 4 bis 6,
**dadurch gekennzeichnet,**
**dass** zwei geschlossene Einzel-Kurven (25, 27) vorgesehen sind.

8. Vorrichtung nach einem der Ansprüche 4 bis 7,
**dadurch gekennzeichnet,**
**dass** wenigstens eine geschlossene Einzel-Kurve (27) in einer Ebene liegt, die parallel zu einer Ebene verläuft, in der die Bahn (11) der Kolben-/Zylinder-Anordnungen liegt.

9. Vorrichtung nach einem der Ansprüche 4 bis 8,
**dadurch gekennzeichnet,**
**dass** die eine Einzel-Kurve (27) in eine Neutralstellung überführbar ist, in der ausschließlich die andere Einzel-Kurve (25) wirksam ist.

10. Vorrichtung nach einem der Ansprüche 4 bis 9,
**dadurch gekennzeichnet,**
**dass** die Einzel-Kurven (25, 27), in einer Projektion auf eine die Bahn (11) der Kolben-/Zylinder-Anordnungen enthaltenen Ebene gesehen, nebeneinander verlaufen und insbesondere auf konzentrischen Kreisen liegen.

11. Vorrichtung nach einem der Ansprüche 4 bis 10,
**dadurch gekennzeichnet,**
**dass** die Einzel-Kurven (25, 27), insbesondere stirnseitig und/oder umfangsseitig, an gegeneinander längs einer gemeinsamen Achse verschiebbaren Elementen (51, 29) ausgebildet sind, wobei bevorzugt wenigstens ein Element (29) ring- oder hülsenförmig ausgebildet ist.

12. Vorrichtung nach einem der Ansprüche 4 bis 11,
**dadurch gekennzeichnet,**
**dass** zumindest eine Einzel-Kurve (27) mit einem manuell oder motorisch drehbaren Stellring (29) verbunden ist, wobei eine Drehbewegung des Stellrings (29) in eine lineare Verstellbewegung der Einzel-Kurve (27) umsetzbar ist, insbesondere mittels einer Gewindeanordnung (31, 33).

13. Vorrichtung nach einem der vorhergehenden Ansprüche,
**dadurch gekennzeichnet,**
**dass** den Kolben (19) jeweils ein mit der Steuerkurve (21) zusammenwirkendes Folgeglied (35) zugeordnet ist, insbesondere eine Rolle.

14. Verfahren zum, insbesondere kontinuierlichen, Abfüllen von pastösem Füllgut, insbesondere Wurstmasse,
bei dem eine Mehrzahl von Kolben-/Zylinder-Anordnungen,
die jeweils einen Zylinder (17) und einen im Zylinder (17) unter Veränderung eines für das Füllgut zur Verfügung stehenden Füllvolumens hin- und herbewegbaren Kolben (19) umfassen,
auf einer geschlossenen Bahn (11), insbesondere auf einer Kreisbahn, umlaufen und dabei wenigstens einen Füllbereich (13) sowie zumindest einen Abgabebereich (15) passieren,
wobei die Stellungen der Kolben (19) in den Zylindern (17) von der Lage der Kolben-/Zylinder-Anordnungen relativ zu einer Steuerkurve (21) abhängig sind, mit der die Kolben-/ Zylinder-Anordnungen bei ihrem Umlauf zusammenwirken, und
bei dem zum Einstellen eines maximalen Füllvolumens der Kolben-/Zylinder-Anordnungen und/oder eines unteren Totpunktes der Kolben (19) die Steuerkurve (21) verändert wird.

15. Verfahren nach Anspruch 14,
**dadurch gekennzeichnet,**
**dass** die Steuerkurve (21) von wenigstens zwei Einzel-Kurven (25, 27) gebildet wird, wobei zum Verändern der Steuerkurve (21) die Einzel-Kurven (25, 27) relativ zueinander verstellt werden.
